(19) Europäisches Patentamt

European Patent Office

Office européen des brevets

(11) **EP 0 600 549 B1**

(12) **EUROPEAN PATENT SPECIFICATION**

(45) Date of publication and mention
of the grant of the patent:
**12.05.1999 Bulletin 1999/19**

(51) Int Cl.$^6$: **G11B 5/39**

(21) Application number: **93203312.9**

(22) Date of filing: **26.11.1993**

(54) **Method of manufacturing a thin-film magnetic head and head obtained by the method**

Verfahren zur Herstellung eines Dünnfilmmagnetkopfes und Kopf erhalten durch das Verfahren

Procédé de fabrication d'une tête magnétique à films minces et tête obtenue selon le procédé

| | |
|---|---|
| (84) Designated Contracting States:<br>**DE FR GB IT** | (74) Representative:<br>**Schrijnemaekers, Hubert Joannes Maria et al<br>INTERNATIONAAL OCTROOIBUREAU B.V.,<br>Prof. Holstlaan 6<br>5656 AA Eindhoven (NL)** |
| (30) Priority: **01.12.1992 EP 92203708** | |
| (43) Date of publication of application:<br>**08.06.1994 Bulletin 1994/23** | (56) References cited:<br>**EP-A- 0 091 812** |
| (73) Proprietor: **Koninklijke Philips Electronics N.V.<br>5621 BA Eindhoven (NL)** | • PATENT ABSTRACTS OF JAPAN vol. 013 no. 159 (P-858),18 April 1989 & JP-A-63 317915 (NEC KANSAI LTD) 26 December 1988, |
| (72) Inventors: | • PATENT ABSTRACTS OF JAPAN vol. 007 no. 228 (P-228),8 October 1983 & JP-A-58 115620 (HITACHI SEISAKUSHO KK) 9 July 1983, |
| • **Ruigrok, Jacobus Josephus Maria<br>NL-5656 AA Eindhoven (NL)**<br>• **van der Zaag, Pieter Jan<br>NL-5656 AA Eindhoven (NL)**<br>• **Folkerts, Wiepke<br>NL-5656 AA Eindhoven (NL)**<br>• **Postma, Lambertus<br>NL-5656 AA Eindhoven (NL)**<br>• **Wolf, Ronald Martin<br>NL-5656 AA Eindhoven (NL)**<br>• **Cillessen, Johannes Franciscus Maria<br>NL-5656 AA Eindhoven (NL)** | • PATENT ABSTRACTS OF JAPAN vol. 012 no. 123 (P-690),16 April 1988 & JP-A-62 246115 (NEC CORP) 27 October 1987,<br>• PATENT ABSTRACTS OF JAPAN vol. 017 no. 616 (P-1643),12 November 1993 & JP-A-05 189724 (TOSHIBA CORP) 30 July 1993, |

## Description

The invention relates to a thin-film magnetic head having a head face and comprising a magnetoresistive element oriented transversely to the head face and a flux-guiding element of a magnetically permeable material terminating in the head face, a peripheral area of the magnetoresistive element extending parallel to the head face being present opposite the flux-guiding element for forming a magnetic connection between the magnetoresistive element and the flux-guiding element.

A magnetic head of this type is known from US 4,425,593 (PHN 9357, herewith incorporated by reference). The known magnetic head is a read head which is used for detecting magnetic fields representing information on a magnetic recording medium moving with respect to the magnetic head, particularly a magnetic tape. The magnetic head comprises a ferrite substrate which constitutes a magnetic yoke together with two aligned layer-shaped flux guides of a nickel-iron alloy. The magnetic head also comprises an elongate layer-shaped magnetoresistive element (MR element) provided with equipotential strips, which element has contact faces at two opposite ends and has such a magnetic anisotropy that the easy axis of magnetization at least substantially coincides with its longitudinal axis. The MR element is arranged within the magnetic yoke in such a way that a gap present between the flux guides is bridged by the MR element. The flux guides have facing end portions which are present opposite peripheral areas of the MR element extending parallel to the longitudinal axis. A quartz insulation layer extends between the ferrite substrate and the electrically conducting MR element and between the MR element and the electrically conducting flux guides. In the known magnetic head a non-magnetic material is thus present in the overlap areas constituted by the peripheral areas of the MR element and the facing end portions of the flux guides.

A drawback of the known magnetic head is that, due to the distance between the peripheral areas of the MR element, which distance is caused by the non-magnetic material, and the opposite end portions of the flux guides, only a small part of the magnetic flux originating from the magnetic recording medium is actually passed through the MR element. In other words, the known magnetic head has a low efficiency.

A method of manufacturing a thin film head having the features of the precharacterising portion of claim 1 is disclosed in JP-A-63-317 915. This known method is rather complicated, difficult to be carried out and time consuming, whilst the result, i.e. the efficiency of the head, is questionable.

The method according to the characterising portion of claim 1 overcomes these problems.

The required resistivity of the magnetically permeable material of the flux-guiding element is substantially determined by the admissible loss of sensitivity resulting from a possible modification of the resistance between the contact faces of the MR element due to the direct connection between the MR element and the flux-guiding element. In this respect it has been found that reasonable to very good results can be achieved if the material of the flux-guiding element is an oxidic soft-magnetic material. For example, the reasonably electrically insulating ferrite $Fe_3O_4$ is suitable for use as a material for the flux-guiding element. It is true that this causes a small decrease of the resistance between the contact faces of the MR element, but this decrease does not lead to unacceptable losses of sensitivity in the case of suitably chosen dimensions. However, an embodiment of the magnetic head according to the invention is preferred which is characterized in that the oxidic soft-magnetic material is an MnZn ferrite or an NiZn ferrite. These ferrites have such a high resistivity that losses of sensitivity due to the flux-guiding element being in electrical contact with the MR element cannot be observed in practice.

It is to be noted that the magnetic head according to the invention provided with a flux-guiding element of ferrite has the further advantage that the corrosion and wear resistance of the head face are improved with respect to a head face of a known magnetic head provided with a metal flux guide.

An embodiment of the magnetic head according to the invention is characterized in that the oxidic soft-magnetic material is a garnet. Garnets form a group of materials that are very suitable for use as magnetic flux conductors. They possess proper mechanical and electrical properties, while the magnetic properties can be tuned by adding dopants to reduce the magnetic anisotropy. The chemical properties of garnets facilitate deposition in thin film form of the compounds in the proper oxygen state. A suitable material is Co/Si doped YIG ($Y_3Fe_5O_{12}$) described in IEEE Transactions on Magnetics, Vol. Mag. 6, no. 3, Sept. 1970, Nicolas et al, p. 608-610 (herewith incorporated by reference), which material has a magnetic permeability of at least 500. Other doped garnets e.g. disclosed in Journal of Magnetism and Magnetic Materials 125 (1993) L23-28, Pascard et al (herewith incorporated by reference) are also suitable.

An embodiment of the magnetic head according to the invention is characterized in that the MR element terminates in the head face, with the flux-guiding element being formed by a substrate. In this embodiment the MR element is directly provided on the substrate comprising preferably MnZn ferrite or NiZn ferrite. Also in this embodiment there are small magnetic and electrical losses.

An embodiment of the magnetic head according to the invention, which has a satisfactory efficiency and at least a reasonable, practically usable sensitivity, is characterized in that the magnetically permeable material of the flux-guiding element satisfies the condition

$$\rho_f = c \cdot \left( \frac{t_1 \cdot h_1}{t_m \cdot b} \right) \cdot \rho_m$$

in which

c    is a numerical value of more than 1/3,
$\rho_f$   is the resistivity of the material of the flux-guiding element
$\rho_m$   is the resistivity of the material of the magnetoresistive element,
$t_1$    is the thickness, viewed in a direction transverse to the magnetoresistive element, of the flux-guiding element,
$t_m$   is the thickness of the magnetoresistive element,
$h_1$   is the height, viewed from the head face, of the flux-guiding element and
b    is the width, viewed in a direction transverse to the head face, of the magnetoresistive element.

A modification of the last-mentioned embodiment, in which the magnetoresistive element has a further peripheral portion located opposite said peripheral portion and opposite a further flux-guiding element of a magnetically permeable material, is characterized in that the further peripheral portion of the magnetoresistive element and the further flux-guiding element constitute a common further magnetic contact face, the magnetically permeable material of the flux-guiding element and the further flux-guiding element satisfying the condition

$$\rho_f = c \cdot \left( \frac{t_1 \cdot h_1 + t_2 \cdot h_2}{t_m \cdot b} \right) \cdot \rho_m$$

in which

c    is a numerical value of more than 1/3,
$\rho_f$   is the resistivity of the magnetically permeable material,
$\rho_m$   is the resistivity of the material of the magnetoresistive element,

$t_1$ and $t_2$ are the thicknesses, viewed in a direction transverse to the magnetoresistive element, of the flux-guiding element and of the further flux-guiding element, respectively,

$h_1$      is the height, viewed and measured from the head face, of the flux-guiding element,
$h_2$      is the height, viewed from the head face and measured from the magnetoresistive element, of the further flux-guiding element, or the width, measured parallel to the head face, of the further flux-guiding element if this width is smaller than the height of the further flux-guiding element, and
b      is the width, viewed in a direction transverse to the head face, of the magnetoresistive element.

An embodiment of the magnetic head according to the invention having a high efficiency and an eminent sensitivity is characterized in that said numerical value c is larger than 3.
The invention also relates to a method of manufacturing the magnetic head according to the invention. It has for its object to provide a simple method comprising a small number of process steps.
The method according to the invention, in which a thin-film structure provided with the magnetoresistive element and the flux-guiding element is formed, is characterized in that a layer of oxidic soft-magnetic material for forming the flux-guiding element is provided, in which method an intermediate structure is obtained which is flattened, whereafter a layer of a magnetically and electrically conducting material for forming the magnetoresistive element is provided, a layer portion constituting the peripheral portion of the magnetoresistive element being directly deposited on a flattened portion of the layer of the oxidic soft-magnetic material. The thin-film structure may be provided on a substrate, preferably a ferrite substrate. The oxidic soft-magnetic material may be provided by means of known techniques, such as sputtering, metal-organic chemical vapour deposition (MO-CVD) or laser ablation. A ferrite, particularly an MnZn ferrite or an NiZn ferrite, or a garnet, for example Co/Si-doped YIG, is preferably used as an oxidic soft-magnetic material.
An embodiment of the method according to the invention with which mechanical stresses in the magnetoresistive element are inhibited is characterized in that a layer of a synthetic resin, for example a photosensitive polymer, is provided across the magnetoresistive element after formation of the magnetoresistive element.
The afore-mentioned and other aspects of the invention will be apparent from and elucidated with reference to the embodiments described hereinafter. In the drawings

Figs. 1D and E show a first embodiment of the magnetic head according to the invention and Figs. 1A to C show stages of manufacture of this embodiment,
Fig. 2 shows a second embodiment of the magnetic head according to the invention
Figs. 3A and B show a third embodiment of the magnetic head according to the invention,
Fig. 4 shows a fourth embodiment of the magnetic head according to the invention and
Fig. 5a shows a $\eta$-$\mu_r$ diagram with a first graph related to a fifth embodiment of the magnetic head according to the invention shown in Fig. 5b, and a second graph related to a known magnetic head shown in Fig. 5c.

It is to be noted that the embodiments are diagrammatical and that the Figures are drawn at arbitrary scales which do not always correspond to each other.

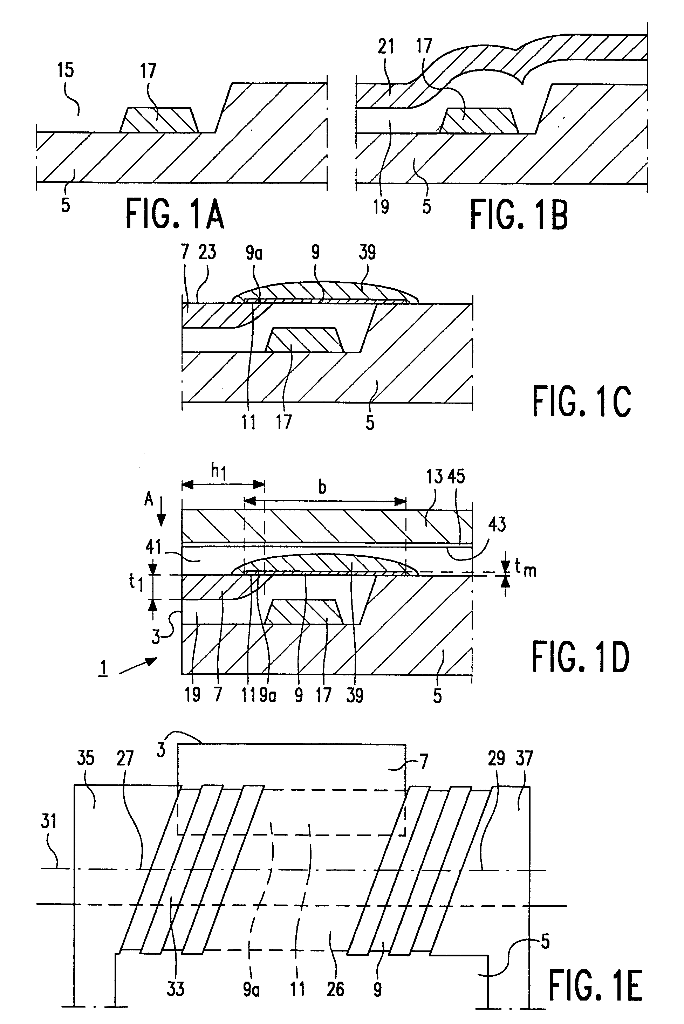

The thin-film magnetic head according to the invention shown in Fig. 1 has a head face 3 along or across which a magnetic recording medium, particularly a magnetic tape can be guided into, for example, a direction A. The magnetic head 1 has a ferrite substrate 5, for example of an MnZn ferrite or an NiZn ferrite on which a thin-film structure is provided. The thin-film structure comprises a flux-guiding element 7 of an oxidic soft-magnetic material, in this example $Fe_3O_4$, terminating in the head face 3, and a magnetoresistive element (MR element) 9, for example an NiFe alloy which constitutes a common magnetic contact face 11 together with the flux-guiding element 7. A protective element 13, usually referred to as counterblock of, for example a ceramic material such as barium titanate is present on the thin-film structure.

An embodiment of the method according to the invention will be described in greater detail with reference to parts A to E of Fig. 1. This method may start from the ferrite substrate 5 in which a recess 15 is made by reactive ion etching. An electrically conducting layer 17, preferably of Au, is provided in the recess 15 by consecutive sputter deposition and sputter etching so as to form a bias winding for biasing the MR element 9. Instead of sputter etching, wet chemical etching may alternatively be used. Subsequently, an electrically insulating layer 19, preferably of an oxidic material such as $ZrO_2$, is formed preferably by sputter deposition. Layers of Mo may be present between the conducting layer 17 and the oxidic substrate 5 and the oxidic layer 19 so as to improve the adhesion.

The layer 19 formed is provided with $Fe_3O_4$, preferably by laser ablation for forming a magnetically permeable, but electrically insulating layer 21. Together with the layer 19 and the substrate 5, the layer 21 is flattened by appropriate means such as a polishing means by which the flux-guiding element 7 is structured. A magnetoresistive material, for example NiFe is provided preferably by sputter deposition or vapour deposition on the flat surface 23 thus obtained and is structured to form the MR element 9.

Since the NiFe is directly deposited on the flux-guiding element 7, a peripheral area 9a of the MR element 9 situated opposite the flux-guiding element 7 constitutes the common magnetic contact face 11 with the flux-guiding element 7. The MR element 9 also has a direct magnetic connection in an area 26 with the magnetically permeable substrate 5.

The elongate MR element 9 has a longitudinal axis 31 extending from one end portion 27 to another end portion 29, which longitudinal axis is parallel or approximately parallel to an easy axis of magnetization. Equipotential strips 33 having a satisfactory electrical conductance and connection faces or contact faces 35 and 37 of, for example Au are structured on the MR element 9.

The equipotential strips 33 are provided at an angle of preferably 45° to the longitudinal axis 31. During operation the equipotential strips 33 ensure that a measuring current applied to the MR element 9 flows at an angle to the easy axis of magnetization for the purpose of linearizing the behaviour of the MR element. Under the influence of a magnetic field of a record carrier moving along the magnetic head 1, the resistance of the parts of the MR element 9 located between the equipotential strips 33 changes in dependence upon the extent to which the direction of magnetization coincides with the current direction in the MR element. The afore-mentioned bias winding formed by the layer 17 is used for further improvement of the linearity of the MR element behaviour.

After the MR element 9 and the equipotential strips 33 have been formed, a photolacquer, particularly a polymer, is provided across the MR element which after exposure and heating, for example to 220°C forms a chemically inert layer 39 having a convex meniscus. Subsequently an electrically insulating oxide layer 41, preferably of $ZrO_2$, is formed preferably by sputter deposition. The layer 41 is then flattened, for example by lapping and polishing so as to form an adhesive face 43 on which the counterblock 13 is secured while a glue 45 is added. Finally, the head face 3 is shaped by means of operations such as grinding and polishing.

The ferrite $Fe_3O_4$, which is used as a material for the flux-guiding element of the magnetic head according to the embodiment shown in Fig. 1, has a satisfactory magnetic permeability and a resistivity of approximately $10^{-4}$ $\Omega$m so that the material can be qualified as a reasonably good electrically insulating material. To ensure at least a sufficient sensitivity of the magnetic head, a number of parameters relating to the magnetic head has been chosen in such a way that the following condition is satisfied:

$$\rho_f = c \cdot \left[ \frac{t_1 \cdot h_1}{t_m \cdot b} \right] \cdot \rho_m$$

In this condition, c is a numerical value of more than 1/3, $\rho_f$ is the resistivity of the $Fe_3O_4$ ferrite of the flux-guiding element 7, $\rho_m$ is the resistivity of the NiFe alloy of the MR element 9, $t_1$ is the thickness of the flux-guiding element 7, $t_m$ is the thickness of the MR element 9, $h_1$ is the height of the flux-guiding element 7 and b is the width of the MR element. If an MnZn ferrite or an NiZn ferrite having a resistivity of approximately 1 $\Omega m$ and approximately $10^5$ $\Omega m$, respectively, is used instead of the $Fe_3O_4$ ferrite, a numerical value c which is larger or much larger than 3 is readily possible so that not only a high efficiency but also an eminent sensitivity can be achieved.

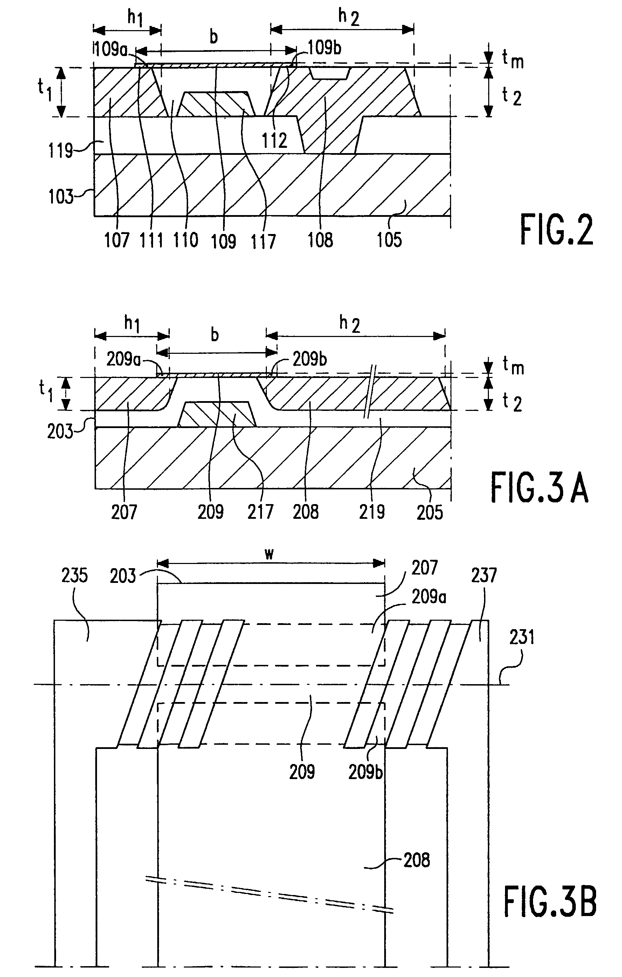

The thin-film magnetic head according to the invention shown in Fig. 2 has a head face 103 and a ferrite substrate 105 comprising a transducing structure. This transducing structure comprises a flux-guiding element 107 (hereinafter referred to as first flux guide 107) terminating in the head face 103 and a further flux-guiding element 108 (hereinafter referred to as second flux guide 108) spaced away therefrom. The flux guides 107 and 108 which are each manufactured of an MnZn ferrite or an NiZn ferrite, are separated from each other by a space 110 which is bridged by an MR element 109 provided on the flux guides without an insulating intermediate layer. The MR element 109 has two mutually parallel peripheral areas 109a and 109b extending longitudinally to the MR element and parallel to the head face 103, which peripheral areas constitute common magnetic contact faces 111 and 112, respectively, with the flux guides 107 and 108. The second flux guide 108 is magnetically connected to the magnetically permeable substrate 105 for creating a magnetic yoke having the shape of a tuning fork.

The magnetic head shown in Fig. 2 is dimensioned in such a way that it satisfies the condition

$$\rho_f = c \cdot \left[ \frac{t_1 \cdot h_1 + t_2 \cdot h_2}{t_m \cdot b} \right] \cdot \rho_m \quad .$$

In this condition, c is a numerical value of more than 3, $\rho_f$ is the resistivity of the ferrite used in the flux guides 107 and 108, $\rho_m$ is the resistivity of the material of the MR element 109, $t_1$ is the thickness of the first flux guide 107, $t_2$ is the thickness of the second flux guide 108, $h_1$ is the height of the flux guide 107, $h_2$ is the height of the flux guide 108 and b is the width of the MR element 109.

It is to be noted that an electrically insulating layer 119 of, for example $SiO_2$ or $ZrO_2$ terminating in the head face 103 extends in the tuning fork-shaped magnetic yoke which is formed by the first flux guide 107, the MR element 109, the second flux guide 108 and the substrate 105. The space 110, which is provided with a bias winding 117, is also filled with an electrically insulating material such as $SiO_2$.

The thin-film magnetic head according to the invention shown in Fig. 3 is closely related to the magnetic head shown in Fig. 2. The magnetic head has a ferrite substrate 205 on which an electric winding 217 and an electrically insulating layer 219 are provided. The insulating layer 219 is provided with a flux-guiding element 207 and, spaced away therefrom, a further flux-guiding element 208, the flux-guiding element 207 adjoining a contact face or head face 203. The flux-guiding elements 207 and 208 are made of an oxidic soft-magnetic material, preferably an MnZn ferrite or an NiZn ferrite and consequently have good magnetic properties and good electrically insulating properties. The insulating layer 219 is further provided with an MR element 209 having a longitudinal axis 231 and a peripheral area 209a being directly provided on the flux-guiding element 207 and a further peripheral area 209b being directly provided on the further flux-guiding element 208. The peripheral areas 209a and 209b extend parallel to the head face 203, i. e. parallel to the longitudinal axis 231 of the MR element 209. The MR element 209 has two electric contact faces 235 and 237 between which the effective part of the MR element extends. The further flux guide 208 has a width w as shown in Fig. 3B, which in this embodiment is smaller than the dimension $h_2*$ shown in Fig. 3A.

The magnetic head as shown in Fig. 3 satisfies the condition

$$\rho_f = c \cdot \left[ \frac{t_1 \cdot h_1 + t_2 \cdot h_2}{t_m \cdot b} \right] \cdot \rho_m \quad .$$

In this condition, c is a numerical value of more than 1/3, but preferably larger than 3, $\rho_f$ is the resistivity of the magnetically permeable material of the flux-guiding elements 207 and 208, $\rho_m$ is the resistivity of the material of the MR element 209, $t_1$ and $t_2$ are the thicknesses of the flux-guiding element 207 and the further flux-guiding element 208, respectively, $h_1$ is the height of the flux-guiding element 207, $h_2$ is the width w of the further flux guide 208 and b is the width of the MR element 209.

An advantage of the magnetic head shown in Fig. 3 over the magnetic head shown in Fig. 2 is that the insulating layer 219 need not be provided with a connection aperture during manufacture of the magnetic head, which results in an economy of one production step.

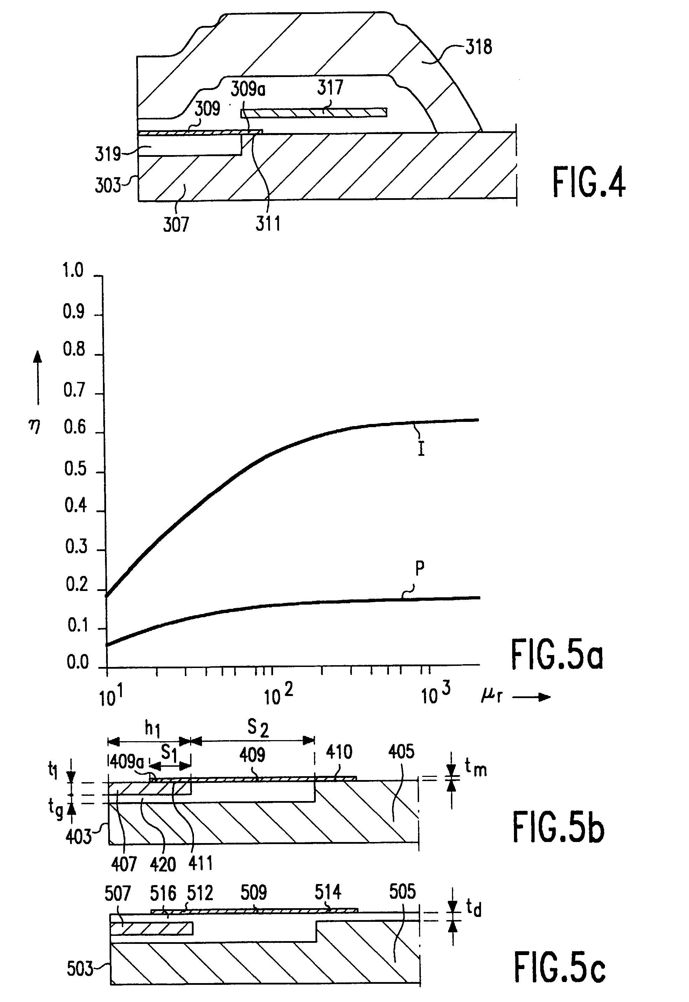

The magnetic head according to the invention shown in Fig. 4 has a head face 303 and an MR element 309 adjoining the head face 303. The MR element 309 has a thin layer of a magnetically anisotropic material such as NiFe. A peripheral area 309a of the MR element 309 extending longitudinally to the MR element is directly provided on a flux-guiding element 307 of an oxidic soft-magnetic material, particularly an MnZn ferrite or an NiZn ferrite. The MR element 309 and the flux-guiding element 307 thus constitute a common magnetic contact face 311. Consequently, the flux-guiding element 307 not only functions as a magnetic flux guide but also as a substrate and is provided with a recess 319 which is filled with an electrically insulating material, for example $ZrO_2$ or $SiO_2$.

The magnetic head shown in Fig. 4 is also provided with an electrically conducting winding 317 which can be used particularly for performing a write function. Together with a flux-guiding layer 318, the flux-guiding element 307 constitutes a magnetic yoke for the magnetic flux generated by a current flowing through the write winding 317. The MR element 319, the winding 317 and the layer 318 are mutually insulated by an electrically insulating material such as $ZrO_2$ or $SiO_2$.

A curve I in the diagram shown in Fig. 5a shows the relation between the efficiency $\eta$ and the relative permeability $\mu_r$ of the flux-guiding element of an embodiment of the magnetic head according to the invention. This embodiment, which is of the type as shown in Fig. 1, is shown diagrammatically in Fig. 5b. The magnetic head according to the invention has a head face 403 and comprises an MR element 409 oriented transversely to the head face 403 and a flux-guiding element 407 of a magnetically permeable, electrically insulating material terminating in the head face. A peripheral area 409a extending parallel to the head face and being located opposite the flux-guiding element 407 is in direct contact with the flux-guiding element 407 with which it constitutes a common magnetic contact face 411. The material of the flux-guiding element 407 is preferably an oxidic soft-magnetic material, particularly an MnZn ferrite or an NiZn ferrite. A contact portion 410 of the MR element 407 extending parallel to the peripheral area 409a is directly provided on a ferrite substrate 405. A transducing gap constituted by an electric insulation layer 420 extends between the ferrite substrate 405 and the flux-guiding element 407. Some dimensions of the magnetic head are: $t_1 = 0.5\ \mu m$; $t_g = 0.4\ \mu m$; $t_m = 0.05\ \mu m$; $h_1 = 3\ \mu m$; $s_1 = 2\ \mu m$; $s_2 = 5\ \mu m$.

Fig. 5c shows a magnetic head comprising a head face 503 and a ferrite substrate 505, a flux guide 507 of a magnetically permeable material and an MR element 509. The MR element 509 has peripheral portions 512 and 514 situated opposite the flux guide 507 and the substrate 505, an electric insulation layer 516 of, for example quartz and having a thickness $t_d$ of 0.5 $\mu m$ extending between the flux guide 507 and the substrate 505 on the one hand and the peripheral portions 512 and 514 of the MR element 509 on the other hand. The peripheral portions 512 and 514 are thus spaced away from the flux guide 507 and the substrate 505, respectively, so that during operation magnetic flux can reach the MR element 509 only *via* the insulation layer 516. The dimensions of this magnetic head further correspond to those of the magnetic head according to the invention shown in Fig. 5b.

Fig. 5a shows a curve P in the above-mentioned diagram indicating the relation between the efficiency $\eta$ of the magnetic head shown in Fig. 5c and the relative permeability $\mu_r$ of the soft-magnetic material of the flux guide 507. The diagram clearly demonstrates the efficiency improvement of the magnetic head according to the invention as compared with the efficiency of the other magnetic head.

It is to be noted that the invention is not limited to the embodiments shown. The scope of the invention provides various other embodiments, notably by using different materials, for example the use of an LiZn ferrite or an MgMnZn ferrite as an oxidic soft-magnetic material, and other designs. Instead of a magnetically permeable substrate a non-magnetic substrate provided with a magnetically permeable layer may be used.

## Claims

1. A method of manufacturing a thin film head having a head face (3, 103, 203, 303, 403) and comprising a magnetoresistive element (9, 109, 209, 309, 409) oriented transversely to the head face and a flux-guiding element (7, 107, 207, 307, 407) of a magnetically permeable material terminating in the head face, a peripheral area (9a, 109a, 209a, 309a, 409a) of the magnetoresistive element extending parallel to the head face being present opposite the flux-guiding element for forming a magnetic connection between the magnetoresistive element and the flux-guiding element, the magnetically permeable material of the flux-guiding element being electrically insulating, characterized by depositing a magnetically permeable material for forming a thin layer (21), which thin layer is flattened for forming the flux guiding element (7, 107, 207, 307, 407), whereafter a magnetically and electrically conducting material for forming the magnetoresistive element ( 9, 109, 209, 309, 409) is deposited in such a way that a thin film portion of the magnetoresistive element constituting the peripheral area (9a, 109a, 209a, 309a, 409a) of the magnetoresistive element is directly formed on a flattened portion (23) of the thin layer of magnetically permeable material constituting a common magnetic contact face (11, 111, 311, 411) between the magnetoresistive element and the flux-guiding element.

2. A method as claimed in Claim 1, characterized in that an oxidic soft-magnetic material is used as a magnetically permeable material.

3. A method as claimed in Claim 2, characterized in that a ferrite is used as an oxidic soft-magnetic material.

4. A method as claimed in Claim 3, characterized in that a MnZn ferrite or a NiZn ferrite is used as a ferrite.

5. A method as claimed in Claim 2, characterized in that a garnet is used as an oxidic soft-magnetic material.

6. A method as claimed in Claim 1, 2 or 3, characterized in that a layer of a synthetic resin is provided across the magnetoresistive element after formation of the magnetoresistive element.

7. A method as claimed in Claim 1, wherein a number of parameters relating to the magnetic head has been chosen in such a way that the following condition is satisfied:

$$\rho_f = c. \left[ \frac{t_1.h_1}{t_m.b} \right] \cdot \rho_m$$

in which

c     is a numerical value of more than 1/3,
$\rho_f$     is the resistivity of the material of the flux-guiding element,
$\rho_m$     is the resistivity of the material of the magnetoresistive element,
$t_1$     is the thickness, viewed in a direction transverse to the magnetoresistive element, of the flux-guiding element,
$t_m$     is the thickness of the magnetoresistive element,
$h_1$     is the height, viewed from the head face, of the flux-guiding element and
b     is the width, viewed in a direction transverse to the head face, of the magnetoresistive element.

8. A method as claimed in Claim 1 wherein a further flux-guiding element (108, 208) of a magnetically permeable material is formed opposite a further peripheral area (109b, 209b) of the magnetoresistive element, wherein the further peripheral area (109b, 209b) and the further flux-guiding element constitute a common further magnetic contact face (112) and wherein the magnetic head is dimensioned in such a way that the magnetically permeable material of the flux-guiding element (107, 207) and the further flux-guiding element (108, 208) satisfies the condition

$$\rho_f =_m c. \left[ \frac{t_1.h_1 + t_2.h_2}{t_m.b} \right] \cdot \rho_m$$

in which

c     is a numerical value of more that 1/3,
$\rho_f$     is the resistivity of the magnetically permeable material,
$\rho_m$     is the resistivity of the material of the magnetoresistive element,
$t_1$ and $t_2$     are the thickness, viewed in a direction transverse to the magnetoresistive element, of the flux-guiding element and of the further flux-guiding element, respectively,
$h_1$     is the height, viewed and measured from the head face, of the flux-guiding element,
$h_2$     is the height, viewed from the head face and measured from the magnetoresistive element, of the

further flux-guiding element, or the width, measured parallel to the head face, of the further flux-guiding element if this width is smaller than the height of the further flux-guiding element, and

b is the width, viewed in a direction transverse to the head face, of the magnetoresistive element.

**9.** A magnetic head obtained by the method of Claim 7 or 8, wherein the numerical value c is larger than 3.

**10.** A magnetic head obtained by the method of Claim 7, wherein the magnetoresistive element terminates in the head face, with the flux-guiding element being formed by a substrate.

**Patentansprüche**

**1.** Verfahren zum Herstellen eines Dünnfilmmagnetkopfes mit einer Kopffläche (3, 103, 203, 303, 403) und mit einem Magneto-Widerstandselement (9, 109, 209, 309, 409), das sich quer zu der Kopffläche erstreckt und mit einem Flussleitelement (7, 107, 207, 307, 407) aus einem magnetisch permeablen Material, das in der Kopffläche endet, wobei ein Randgebiet 9a, 109a, 209a, 309a, 409a) des Magneto-Widerstandselementes, das sich parallel zu der Kopffläche erstreckt, gegenüber dem Flussleitelement liegt zum Bilden einer magnetischen Verbindung zwischen dem Magneto-Widerstandselement und dem Flussleitelement, wobei das magnetisch permeable Material des Flussleitelementes elektrisch isolierend ist, gekennzeichnet durch das Ablagern eines magnetisch permeablen Materials zur Bildung einer dünnen Schicht (21), die geglättet wird zur Bildung des Flussleitelementes (7, 107, 207, 307, 407), wonach ein magnetisch und elektrisch leitendes Material zur Bildung des Magneto-Widerstandselementes (9, 109, 209, 309, 409) derart abgelagert wird, dass ein Dünnfilmteil des Magneto-Widerstandselementes, der das Randgebiet (9a, 109a, 209a, 309a, 409a) des Magneto-Widerstandselementes bildet, unmittelbar auf einem flachen Teil (23) der dünnen Schicht aus magnetisch permeablem Material gebildet wird, die eine gemeinsame magnetische Kontaktfläche (11, 111, 311, 411) zwischen dem Magneto-Widerstandselement und dem Flussleitelement bildet.

**2.** Verfahren nach Anspruch 1, dadurch gekennzeichnet, dass ein oxidisches weich-magnetisches Material als magnetisch permeables Material verwendet wird.

**3.** Verfahren nach Anspruch 2, dadurch gekennzeichnet, dass ein ferrit als ein oxidisches, weich-magnetisches Material verwendet wird.

**4.** Verfahren nach Anspruch 3, dadurch gekennzeichnet, dass ein MnZn-Ferrit oder ein NiZn-Ferrit als Ferrit verwendet wird.

**5.** Verfahren nach Anspruch 2, dadurch gekennzeichnet, dass ein Granat als oxidisches, weich-magnetisches Material verwendet wird.

**6.** Verfahren nach Anspruch 1, 2 oder 3, dadurch gekennzeichnet, dass eine Schicht aus einem Kunststoff über das Magneto-Widerstandselement vorgesehen wird nach der Bildung des Magneto-Widerstandselementes.

**7.** Verfahren nach Anspruch 1, wobei eine Anzahl Parameter in Bezug auf den Magnetkopf derart gewählt worden sind, dass die nachfolgende Bedingung erfüllt ist:

$$\rho_f = c.\left(\frac{t_1 . h_1}{t_m . b}\right).\rho_m$$

worin

c ein Zahlenwert größer als 1/3 ist,
$\rho_f$ der spezifische elektrische Widerstand des Materials des Flussleitelementes ist,
$\rho_m$ der spezifische elektrische Widerstand des Materials des Magneto-Widerstandselementes ist,
$t_1$ die Dicke, gesehen in einer Richtung quer zu dem Magneto-Widerstandselement, des Flussleitelementes ist,
$t_m$ die Dicke des Magneto-Widerstandselementes ist,
$h_1$ die Höhe, gesehen von der Kopffläche, des Flussleitelementes ist und

b die Breite, gesehen in einer Richtung quer zu der Kopffläche, des Magneto-Widerstandselementes ist.

8. Verfahren nach Anspruch 1, wobei ein weiteres Flussleitelement (108, 208) aus einem magnetisch permeablen Material gegenüber einem weiteren Randgebiet (109b, 209b) des Magneto-Widerstandselementes gebildet ist, wobei das weitere Randgebiet (109b, 209b) und das weitere Flussleitelement eine gemeinsame weitere magnetische Kontaktfläche (112) bildet und wobei der Magnetkopf derart bemessen ist, dass das magnetisch permeable Material des Flussleitelementes (107, 207) und des weiteren Flussleitelementes (108, 208) die nachfolgenden Bedingung erfüllt:

$$\rho_f = c \cdot \left( \frac{t_1 \cdot h_1 + t_2 \cdot h_2}{t_m \cdot b} \right) \cdot \rho_m$$

worin

| | |
|---|---|
| c | ein Zahlenwert, größer als 1/3 ist, |
| $\rho_f$ | der spezifische elektrische Widerstand des magnetisch permeablen Materials ist, |
| $\rho_m$ | der spezifische elektrische Widerstand des Materials des Magneto-Widerstandselementes ist, |
| $t_1$ und $t_2$ | Die Dicke, gesehen in einer Richtung quer zu dem Magneto-Widerstandselement, des Flussleitelementes bzw. des weiteren Flussleitelementes ist, |
| $h_1$ | die Höhe, gesehen und gemessen von der Kopffläche, des Flussleitelementes ist, |
| $h_2$ | die Höhe, gesehen von der Kopffläche und gemessen von dem Magneto-Widerstandselement, des weiteren Flussleitelementes ist, oder die parallel zu der Kopffläche gemessene Breite des weiteren Flussleitelementes ist, wenn diese kleiner ist als die Höhe des weiteren Flussleitelementes, und |
| b | die Breite, gesehen in einer Richtung quer zu der Kopffläche, des Magneto-Widerstandselementes ist. |

9. Magnetkopf, erhalten nach dem Verfahren nach Anspruch 7 oder 8, wobei der Zahlenwert c größer ist als 3.

10. Magnetkopf, erhalten nach dem Verfahren nach Anspruch 7, wobei das Magneto-Widerstandselement in der Kopffläche endet, wobei das Flussleitelement durch ein Substrat gebildet ist

## Revendications

1. Procédé pour fabriquer une tête à film mince présentant une face de tête (3, 103, 203, 303, 403) et comportant un élément magnétorésistif (9, 109, 209, 309, 409) orienté transversalement à la face de tête et un élément de guidage de flux (7, 107, 207, 307, 407) constitué d'un matériau magnétiquement perméable se terminant dans la face de tête, une zone périphérique (9a, 109a, 209a, 309a, 409a) de l'élément magnétorésistif s'étendant en parallèle à la face de tête se situant à l'opposé de l'élément de guidage de flux pour constituer une connexion magnétique entre l'élément magnétorésistif et l'élément de guidage de flux, le matériau magnétiquement perméable de l'élément de guidage de flux étant électriquement isolant, caractérisé par le dépôt d'un matériau magnétiquement perméable pour constituer une couche mince (21), ladite couche mince étant aplatie pour constituer l'élément de guidage de flux (7, 107, 207, 307, 407), après quoi un matériau magnétiquement et électriquement conducteur pour constituer l'élément magnétorésistif (9, 109, 209, 309, 409) est déposé de façon qu'une partie de film mince de l'élément magnétorésistif constituant la zone périphérique (9a, 109a, 209a, 309a, 409a) de l'élément magnétorésistif soit formée directement sur une partie aplatie (23) de la couche mince en matériau magnétiquement perméable constituant une face de contact magnétique commune (11, 111, 311, 411) entre l'élément magnétorésistif et l'élément de guidage de flux.

2. Procédé selon la revendication 1, caractérisé en ce qu'un matériau magnétique doux oxydique s'utilise comme matériau magnétiquement perméable.

3. Procédé selon la revendication 2, caractérisé en ce qu'une ferrite s'utilise comme matériau magnétique doux oxydique.

4. Procédé selon la revendication 3, caractérisé en ce qu'une ferrite de MnZn ou une ferrite de NiZn s'utilise comme ferrite.

5. Procédé selon la revendication 2, caractérisé en ce qu'un grenat s'utilise comme matériau magnétique doux oxydique.

6. Procédé selon la revendication 1, 2 ou 3, caractérisé en ce qu'une couche constituée d'une résine synthétique est déposée à travers l'élément magnétorésistif après la formation de l'élément magnétorésistif.

7. Procédé selon la revendication 1 suivant lequel un certain nombre de paramètres relatifs à la tête magnétique a été choisi de façon que la condition suivante soit satisfaite:

$$\rho_f = c \cdot \left( \frac{t_1 \cdot h_1}{t_m \cdot b} \right) \cdot \rho_m$$

où

c        est une valeur numérique supérieure à 1/3,
$\rho_f$      est la résistivité du matériau de l'élément de guidage de flux,
$\rho_m$      est la résistivité du matériau de l'élément magnétorésistif,
$t_1$      est l'épaisseur, vue dans une direction transversale à l'élément magnétorésistif, de l'élément de guidage de flux,
$t_m$      est l'épaisseur de l'élément magnétorésistif,
$h_1$      est la hauteur, vue à partir de la face de tête, de l'élément de guidage de flux, et
b        est la largeur, vue dans une direction transversale à la face de tête, de l'élément magnétorésistif.

8. Procédé selon la revendication 1 suivant lequel un nouveau autre élément de guidage de flux (108, 208) constitué d'un matériau magnétiquement perméable est formé à l'opposé d'une nouvelle autre zone périphérique (109b, 209b) de l'élément magnétorésistif où la nouvelle autre zone périphérique (109b, 209b) et le nouveau autre élément de guidage de flux constituent une nouvelle autre face de contact magnétique commune (112) et où la tête magnétique est dimensionnée de façon que le matériau magnétiquement perméable de l'élément de guidage de flux (107, 207) et du nouveau autre élément de guidage de flux (108, 208) satisfasse à la condition

$$\rho_f = c \cdot \left( \frac{t_1 \cdot h_1 + t_2 \cdot h_2}{t_m \cdot b} \right) \cdot \rho_m$$

où

c              est une valeur numérique supérieure à 1/3,
$\rho_f$          est la résistivité du matériau magnétiquement perméable,
$\rho_m$          est la résistivité du matériau de l'élément magnétorésistif,
$t_1$ et $t_2$    sont les épaisseurs, vues dans une direction transversale à l'élément magnétorésistif, de l'élément de guidage de flux respectivement du nouveau autre élément de guidage de flux,
$h_1$          est la hauteur, vue et mesurée à partir de la face de tête, de l'élément de guidage de flux,
$h_2$          est la hauteur, vue à partir de la face de tête et mesurée à partir de l'élément magnétorésistif, du nouveau autre élément de guidage de flux, ou la largeur, mesurée en parallèle à la face de tête, du nouveau autre élément de guidage de flux si cette largeur est inférieure à la hauteur du nouveau autre élément de guidage de flux, et
b              est la largeur, vue dans une direction transversale à la face de tête, de l'élément magnétorésistif.

9. Tête magnétique obtenue selon le procédé de la revendication 7 ou 8 suivant lequel la valeur numérique est supérieure à 3.

10. Tête magnétique obtenue suivant le procédé de la revendication 7, dans laquelle l'élément magnétorésistif se termine dans la face de tête, l'élément de guidage de flux étant formé par un substrat.

FIG. 1A

FIG. 1B

FIG. 1C

FIG. 1D

FIG. 1E

FIG.2

FIG.3A

FIG.3B

FIG.4

FIG.5a

FIG.5b

FIG.5c